# EUROPÄISCHE PATENTSCHRIFT

(11) **EP 3 934 923 B1**
(45) Veröffentlichungstag und Bekanntmachung des Hinweises auf die Patenterteilung: **15.03.2023**
(21) Anmeldenummer: 20704259.9
(22) Anmeldetag: 06.02.2020
(51) Int. Cl.: B60G 7/00

(54) **KOPPELSTANGE**
COUPLING ROD
TIGE D'ACCOUPLEMENT

(30) Priorität: 04.03.2019 DE 102019202900
(43) Veröffentlichungstag der Anmeldung: 12.01.2022
(73) Patentinhaber: ZF Friedrichshafen AG, 88046 Friedrichshafen (DE)
(72) Erfinder: BRAUN, Marco, 32339 Espelkamp (DE)
(74) Vertreter: ZF Friedrichshafen AG
(86) Internationale Anmeldenummer: PCT/EP2020/052996
(87) Internationale Veröffentlichungsnummer: WO 2020/177974

(56) Entgegenhaltungen:
- EP-A2- 1 733 861
- DE-A1-102012 020 628
- DE-A1-102012 213 664
- DE-A1-102013 214 673
- DE-A1-102016 106 381
- DE-U1-212013 000 204

## Beschreibung

Die vorliegende Erfindung betrifft eine Koppelstange zur gelenkigen Anbindung von Fahrwerksteilen mit zwei Gelenkaufnahmen, die entlang einer Längsachse über eine Strebenstruktur miteinander verbunden sind, wobei die Strebenstruktur zwei parallel ausgerichtete Außenstreben besitzt, die über mehrere Querstreben miteinander verbunden sind.

Koppelstangen der eingangs genannten Art sind nach dem Stand der Technik bekannt. Insbesondere als gelenkige Verbindung zwischen einem Querstabilisator und einem federnd gelagerten Radträgerteil bilden sie Pendelstützen, die das Wankverhalten von Fahrzeugen in Kurvenfahren reduzieren. Als gelenkige Verbindung stark beanspruchter Fahrwerksteile müssen derartige Koppelstangen hinreichend knickstabil ausgestaltet sein und sie müssen eine hohe Zugkraft aufnehmen können. Bei alledem müssen sie an die beengten Platzverhältnisse im Bereich der Radaufhängung angepasst sein, woraus sich ein Zielkonflikt zwischen Bauraumanforderung einerseits und Stabilitätsanforderung andererseits ergibt. Bei alledem darf die Masse einer Koppelstange bestimmte anwendungsabhängige Grenzwerte nicht übersteigen und die Koppelstange sollte eine geringst mögliche Masse besitzen.

Aus der DE 10 2012 213664 A1 ist eine Koppelstange mit den Merkmalen des Oberbegriffes des Anspruchs 1 bekannt. Hierbei bildet eine als Kugelgelenkaufnahme ausgebildete Gelenkaufnahme einen kuppelförmigen Abschnitt, der sich rechtwinklig zu zwei parallel zueinander ausgerichteten Außenstreben erstreckt.

Der DE 10 2013 214 673 A1 ist eine Koppelstange zu entnehmen, die mittels zweier parallel zueinander ausgerichteten Außenstreben und einer senkrecht zu den Au-ßenstreben ausgerichteten Wand ein im Wesentlichen U-förmiges Querschnittsprofil bildet.

Aus der DE 10 2016 106 381 A1 ist eine Koppelstange mit zwei Außenstreben und einer zwischen den Außenstreben angeordneten Mittelstrebe bekannt.

Der EP 1 733 861 A2 ist eine Koppelstange mit einer als Kugelgelenkaufnahme ausgebildete Gelenkaufnahme zu entnehmen, wobei die Kugelgelenkaufnahme einen kuppelförmigen Abschnitt bildet.

Aus der DE 21 2013 000 204 U1 ist eine Koppelstange mit ringförmigen Gelenkaufnahmen bekannt, wobei sich ein oder mehrere Stützstreben tangential von der ringförmigen Gelenkaufnahme zu seitlichen Flächen eines Verbindungsbalkens erstrecken.

DE 10 2012 020 628 A1 offenbart beispielsweise eine als Pendelstütze ausgebildete Koppelstange, die als Spritzgussteil im Spritzgießverfahren hergestellt ist. Entlang einer Längsachse sind zwei Gelenkaufnahmen über eine Strebenstruktur miteinander verbunden, die mehrere Querstreben aufweist. Trotz der bereits vorhandenen Strebenstruktur genügt die offenbarte Koppelstange noch nicht den hohen Anforderungen an Knick- und Zugstabilität.

Es ist daher die Aufgabe der vorliegenden Erfindung, eine Koppelstange zu schaffen, die bei geringstmöglichem Bauraumbedarf ein Maximum an Knick- und Zugstabilität liefert.

Diese Aufgabe wird durch die Koppelstange nach Anspruch 1 gelöst. Erfindungsgemäß ist vorgesehen, dass die Querstreben in Bezug auf die Längsachse einen Winkel von 45° ± 10° aufweisen und eine Mittelwand angeordnet ist, die senkrecht zu den Außenstreben ausgerichtet ist und die Außenstreben miteinander verbindet. Die erfindungsgemäße Geometrie der Strebenstruktur liefert überraschenderweise ein Maximum an Knick- und Zugstabilität bei geringstmöglichem Bauraumbedarf. Dabei resultiert insbesondere aus der durchgängig ausgestalteten Mittelwand eine erhöhte Steifigkeit der Strebenstruktur. Hierdurch kann bei Bedarf die jeweils vorgesehene Wandstärke einzelner Streben reduziert werden, woraus sich auch ein Gewichtsvorteil gegenüber bekannter Koppelstangen ergibt.

Bevorzugte Ausführungsformen der vorliegenden Erfindung werden nachfolgend und in den Unteransprüchen angegeben.

Nach einer ersten vorteilhaften Ausführungsform der Erfindung ist vorgesehen, dass zwischen den Außenstreben zumindest bereichsweise eine parallel angeordnete Mittelstrebe angeordnet ist, die mit den winklig angeordneten Querstreben derart verbunden ist, dass sich zwischen der Mittelstrebe, den Außenstreben, den Querstreben und der Mittelwand einseitig geöffnete und, vorzugsweise im Wesentlichen, trapezförmige Taschen bilden. Insbesondere die zusätzlich angeordnete Mittelstrebe führt zu einer weiteren Versteifung der Koppelstange was sich vorteilhaft auf die Knick- und Zugstabilität auswirkt. Vorzugsweise ergibt sich mittels der trapezförmigen Taschen ein verbessertes Fließen eines Kunststoffes zum Herstellen der Koppelstange. Vorzugsweise ergeben sich aufgrund der trapezförmigen Taschen größere Kerne für ein Spritzgusswerkzeug zum Herstellen der Koppelstange. Insbesondere ergeben sich mittels der trapezförmigen Taschen größere Kerne als für dreieckförmige Taschen. Bei dreieckigen oder dreieckförmigen Taschen sind die Kerne für ein Spritzgusswerkzeug relativ klein, so dass diese, insbesondere aufgrund hoher Temperaturen und/oder Drücke im Spritzgusswerkzeug, vorzeitig verschleißen oder sogar abbrechen können. Dieses Risiko wird durch die trapezförmigen Taschen erheblich reduziert.

Gemäß einer Weiterbildung sind trapezförmige Taschen im Bereich zwischen einer ersten der zwei Außenstreben und der Mittelstrebe entgegen trapezförmigen Taschen im Bereich zwischen einer zweiten der zwei Außenstreben und der Mittelstrebe ausgerichtet. Somit können bei in Bezug zu der Mittelstrebe einander gegenüberliegende trapezförmigen Taschen jeweils gleichartige Seiten der trapezförmigen Taschen zugewandt sein. Vorzugsweise sind die trapezförmigen Taschen symmetrisch und/oder spiegelsymmetrisch zu der Mittelstrebe ausgebildet. Hiernach sind die trapezförmigen Taschen im Bereich zwischen der ersten der zwei Außenstreben und der Mittelstrebe spiegelsymmetrisch zu den trapezförmigen Taschen im Bereich zwischen der zweiten der zwei Außenstreben und der Mittelstrebe ausgebildet. Hierdurch treffen jeweils zwei von den beiden Außenstreben in Richtung der Mittelstrebe gerichtete Querstreben auf der Mittelstrebe zusammen. Dies begünstigt die Festigkeit der Koppelstange. Von besonderem Vorteil für die Festigkeit und/oder da Fließverhalten des Kunststoffes ist, dass auf orthogonal zur Belastungsrichtung und/oder Fließrichtung stehende Streben verzichtet werden kann oder vollständig verzichtet wird.

Erfindungsgemäß ist vorgesehen, dass eine Gelenkaufnahme der Koppelstange als Kugelgelenkaufnahme und die andere Gelenkaufnahme zur Aufnahme eines Gummilagers ausgebildet ist. Eine derartige Ausgestaltung der Gelenkaufnahmen hat sich insbesondere bei der Verwendung der Koppelstange als Pendelstütze und mithin als Verbindung zwischen Querstabilisator und federnd gelagertem Radträgerteil als vorteilhaft erwiesen.

Vorzugsweise gehen die Außenstreben im Bereich zumindest einer der Gelenkaufnahmen in äußere Versteifungsstreben über, die die Gelenkaufnahme oder beide Gelenkaufnahmen vollständig umgreifen. Soweit eine Mittelstrebe angeordnet ist, ist vorzugsweise vorgesehen, dass die Mittelstrebe im Bereich der Aufnahme des Gummilagers in eine innere Versteifungsstrebe übergeht, die die Aufnahme des Gummilagers vollständig umgreift und über Querstreben mit dem äußeren Versteifungsstreben verbunden ist. Durch die Verlängerung der Außenstreben und/oder der Mittelstrebe in Versteifungsstreben bilden sich Schlingen, die die Gelenkaufnahmen umgreifen und hierdurch die Zugstabilität der Koppelstange und mithin deren Lebensdauer deutlich vergrößern.

Um die Stabilität einer Koppelstange weiterhin zu verbessern, ist erfindungsgemäß vorgesehen, dass die Kugelgelenkaufnahme einen kuppelförmigen Abschnitt bildet, der die Oberfläche einer Außenstrebe überragt, wobei der kuppelförmige Abschnitt und die Außenstrebe über eine doppelwandige Stützstruktur mit Querrippen miteinander verbunden sind.

Die Gelenkachsen der Gelenkaufnahmen sind an den bestimmungsgemäßen Einbau im Fahrwerk angepasst. Insbesondere können sie dabei parallel oder um 90° verdreht zueinander ausgerichtet sein.

Die besondere Stabilität der erfindungsgemäßen Koppelstange ist nicht nur auf die besondere Geometrie zurückzuführen, sondern auch auf das Herstellverfahren. Nach einer bevorzugten Ausgestaltung der Erfindung wird die Koppelstange im Spritzgießverfahren hergestellt und ist als Kunststoffspritzgussteil ausgestaltet. Bei einem solchen Spritzgießverfahren wird erwärmter und mithin fließfähiger Kunststoff in ein Spritzgießwerkzeug unter Druck eingespritzt, so dass der Kunststoff durch das gesamte Spritzgießwerkzeug fließt. Im Bereich der Strebenstruktur zwischen den Gelenkaufnahmen der Koppelstange ergibt sich dabei ein sehr homogenes Fließverhalten, weil sich die Streben entweder in Fließrichtung erstrecken (Außenstreben, Mittelstrebe und Mittelwand) oder, sofern die Querstreben betroffen sind, um 45° ± 10° demgegenüber geneigt sind. Im Übrigen ist die Koppelstange im Bereich der Strebenstruktur zwischen den Gelenkaufnahmen frei von Streben, die orthogonal zur Fließrichtung ausgerichtet sind, was zu einem harmonischen Fließen und einer verbesserten Festigkeit der Koppelstange insbesondere entlang der Hauptbelastungsachse führt.

Um insbesondere im Bereich der Streben zwischen den Gelenkaufnahmen ein einheitliches Fließverhalten zu begünstigen, ist nach einer bevorzugten Ausgestaltung der Erfindung vorgesehen, dass das Spritzgießverfahren mit einem Spritzgusswerkzeug durchgeführt wird, das im Bereich der Kugelgelenkaufnahme einen Kugelgelenkzapfen aufnimmt, der beim Spritzgießen unmittelbar oder mittelbar derart mit Kunststoff umspritzt wird, dass die Koppelstange im ausgehärteten Zustand formschlüssig mit dem Kugelgelenkzapfen verbunden ist. Hierzu ist ein, insbesondere der einzige, Anspritzpunkt beim Spritzgießen vorzugsweise an der Kugelgelenkaufnahme angeordnet, insbesondere am kuppelförmigen Abschnitt der Kugelgelenkaufnahme. Auch hierdurch durchfließt der flüssige Kunststoff die Strebenstruktur zwischen den Gelenkaufnahmen in einer einheitlichen Richtung, was nach dem Aushärten des Kunststoffs zu einer verbesserten Festigkeit der Koppelstange führt. Beim mittelbaren Umspritzen des Kugelgelenkzapfens wird das Kunststoffmaterial unmittelbar um den Kugelgelenkzapfen gespritzt, so dass der Kugelgelenkzapfen im ausgehärteten Zustand am Kunststoffmaterial der Koppelstange anliegt. Bei dem mittelbaren Umspritzen ist eine Kugelschale vorgesehen, die den Kugelgelenkzapfen bereits während des Spritzgussverfahrens umgreift und die Gelenkfläche bildet. Eine solche Kugelschale ist vorzugsweise aus Polyoxymethylen (POM) gefertigt.

Konkrete Ausführungsformen der vorliegenden Erfindung werden nachfolgend mit Bezug auf die Figuren erläutert. Es zeigen:
- Fig. 1a: eine perspektivische Ansicht einer Koppelstange,
- Fig. 1b, c: unterschiedliche Querschnittsdarstellungen der Koppelstange nach Fig. 1a und
- Fig. 2: eine perspektivische Ansicht einer weiteren Koppelstange.

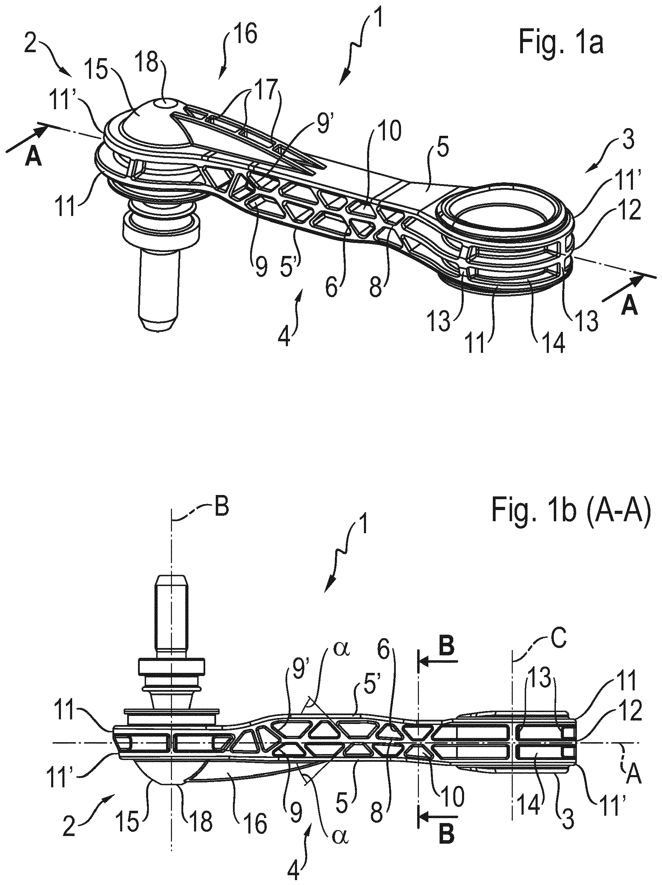

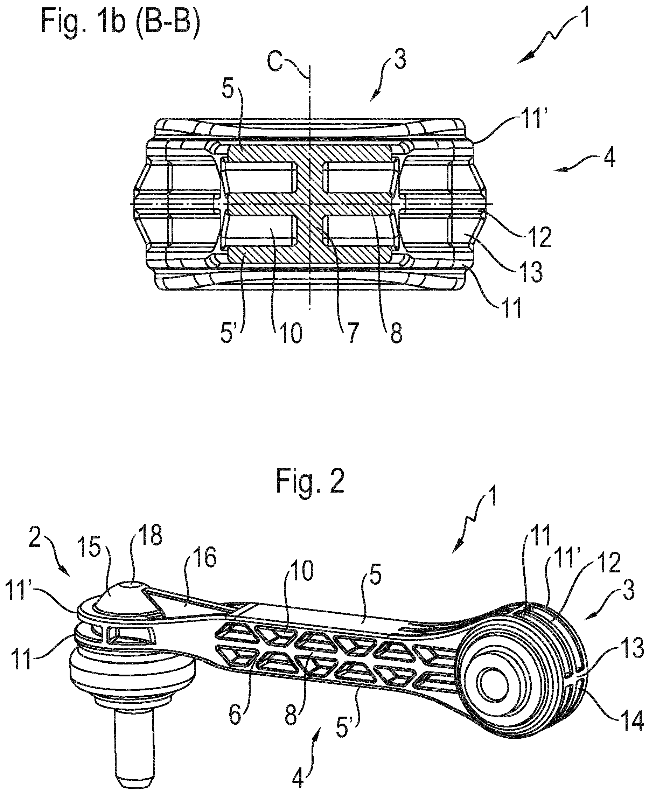

Fig. 1a zeigt in perspektivischer Darstellung ein erstes Ausführungsbeispiel einer erfindungsgemäßen Koppelstange 1 zur gelenkigen Verbindung von Fahrwerksteilen (nicht dargestellt) mit zwei Gelenkaufnahmen 2, 3. Die Gelenkaufnahmen 2, 3 sind entlang einer Längsachse A über eine Strebenstruktur 4 miteinander verbunden, die zwei parallele Außenstreben 5, 5' besitzt. Die Außenstreben 5, 5' sind über mehrere Querstreben 6 zumindest mittelbar miteinander verbunden, die in Bezug auf die Längsachse A einen Winkel α von 45° aufweisen (vgl. Fig. 1b). Die Außenstreben 5, 5' sind zudem über eine senkrechte Mittelwand 7 verbunden, die in der Querschnittsdarstellung B-B der Fig. 1c gezeigt ist. Ferner ist zwischen den Außenstreben 5, 5' und entlang der Längsachse A eine Mittelstrebe 8 ausgebildet. Im dargestellten Ausführungsbeispiel ist die Mittelstrebe 8 nicht durchgängig von der Gelenkaufnahme 2 zur Gelenkaufnahme 3 ausgebildet, sondern erstreckt sich von der Gelenkaufnahme 3 ausgehend bis in etwa die zweite (links dargestellte) Hälfte der Strebenstruktur 4, wo die Mittelstrebe 8 über zwei Querstreben 9, 9' in die Außenstreben 5, 5' übergeht. Die Mittelstrebe 8 ist mit den winklig angeordneten Querstreben 6, 9, 9' derart verbunden, dass sich zwischen der Mittelstrebe 8, den Außenstreben 5, 5', den Querstreben 6, 9, 9' und der Mittelwand 7 einseitig geöffnete und im Wesentlichen trapezförmige Taschen 10 bilden.

Die Gelenkaufnahmen 2, 3 können in unterschiedlicher Weise ausgestaltet sein. In der dargestellten Ausführungsform ist die Gelenkaufnahme 2 als Kugelgelenkaufnahme und die Gelenkaufnahme 3 als Aufnahme eines Gummilagers ausgebildet. Beide Gelenkaufnahmen 2, 3 werden von Versteifungsstreben 11, 11' vollständig umgriffen, die im Bereich der Strebenstruktur 4 in die Außenstreben 5, 5' übergehen. Die in Fig. 1a dargestellte Mittelstrebe 8 geht ebenfalls im Bereich der Aufnahme des Gummilagers und mithin im Bereich der Gelenkaufnahme 3 in eine innere Versteifungsstrebe 12 über, die die Aufnahme des Gummilagers vollständig umgreift und dabei über Querstreben 13 mit den äußeren Versteifungsstreben 11, 11' verbunden ist. Die Querstreben 13 sind im Wesentlichen parallel zueinander ausgerichtet, so dass sich zwischen den Querstreben 13, den äußeren Versteifungsstreben 11, 11' und der mittleren Versteifungsstrebe 12 im Querschnitt quaderförmige Taschen 14 ausbilden.

Die als Kugelgelenkaufnahme ausgebildete Gelenkaufnahme 2 besitzt einen kuppelförmigen Abschnitt 15, der die Oberfläche der Außenstrebe 5 überragt. Zur weiteren Versteifung der Koppelstange 1 ist der kuppelförmige Abschnitt 15 und die Außenstrebe 5 über eine doppelwandige Stutzstruktur 16 mit parallelen Querrippen 17 verbunden.

Im dargestellten Ausführungsbeispiel sind die Gelenkachsen B, C parallel zueinander ausgerichtet. Fig. 2 zeigt demgegenüber eine Ausführungsform einer Koppelstange 1, bei der die Gelenkachsen B, C um 90° zueinander verdreht ausgerichtet sind. Im Übrigen entspricht die Ausgestaltung gemäß Fig. 2 im Wesentlichen der Ausgestaltung gemäß der Fig. 1a-c, wobei die Versteifungsstreben 11, 11', 12 aufgrund der Verdrehung nicht mit den Außenstreben 5, 5' bzw. der Mittelstrebe 8 übergehen. Darüber hinaus ist die Mittelstrebe 8 bei der Ausführungsform nach Fig. 2 durchgehend ausgebildet und verbindet die Gelenkaufnahmen 2, 3. Bei diesem Ausführungsbeispiel sind die Außenstreben 5, 5'parallel zueinander bzw. symmetrisch zur Mittelstrebe 8 ausgebildet. Des Weiteren sind hier die trapezförmigen Taschen 10 spiegelsymmetrisch zur Mittelstrebe 8 ausgebildet bzw. angeordnet.

Die Koppelstangen 1 der gezeigten Ausführungsformen werden im Spritzgussverfahren hergestellt. Hierzu ist im Bereich der Kugelgelenkaufnahme und mithin der Gelenkaufnahme 2, insbesondere dort im Bereich des kuppelförmigen Abschnitts 15 eine Abflachung 18 angeordnet, die den Anspritzpunkt bildet. Während der Herstellung einer Koppelstange 1 wird an dieser Stelle der flüssige Kunststoff in ein Spritzgusswerkzeug eingespritzt und fließt von dort aus durch das gesamte Spritzgusswerkzeug. Bei der Durchführung des Spritzgießverfahrens nimmt das Spritzgusswerkzeug bereits im Bereich der Kugelgelenkaufnahme einen Kugelgelenkzapfen auf, der beim Spritzgießen unmittelbar mit Kunststoff umspritzt wird. Im ausgehärteten Zustand der Koppelstange 1 wird der Kugelgelenkzapfen bereits formschlüssig umgriffen und muss nicht durch Aufweitung der Gelenkaufnahme in die Gelenkaufnahme eingepresst werden.

### Bezugszeichen

- 1: Koppelstange
- 2: Gelenkaufnahme
- 3: Gelenkaufnahme
- 4: Strebenstruktur
- 5 5`: Außenstrebe
- 6: Querstreben
- 7: Mittelwand
- 8: Mittelstrebe
- 9, 9`: Querstrebe
- 10: Tasche
- 11, 11': Versteifungsstreben
- 12: Versteifungsstrebe
- 13: Querstrebe
- 14: Tasche
- 15: kuppelförmiger Abschnitt
- 16: doppelwandige Stützstruktur
- 17: Querrippe
- 18: Abflachung

- A: Längsachse
- B, C: Gelenkachsen
- α: Winkel

## Patentansprüche

1. Koppelstange zur gelenkigen Anbindung von Fahrwerksteilen, die Koppelstange aufweisend zwei Gelenkaufnahmen (2, 3), die entlang einer Längsachse (A) über eine Strebenstruktur (4) miteinander verbunden sind, wobei die Strebenstruktur (4) zwei parallel ausgerichtete Außenstreben (5, 5') besitzt, die über mehrere Querstreben (6, 9, 9') miteinander verbunden sind, und eine Mittelwand (7) angeordnet ist, die senkrecht zu den Außenstreben (5, 5') ausgerichtet ist und die Außenstreben (5, 5') miteinander verbindet, wobei eine Gelenkaufnahme (2) als Kugelgelenkaufnahme und die andere Gelenkaufnahme (3) zur Aufnahme eines Gummilagers ausgebildet ist, **dadurch gekennzeichnet, dass** die Querstreben (6, 9, 9') in Bezug auf die Längsachse (A) einen Winkel von 45° ± 10° aufweisen und dass die Kugelgelenkaufnahme einen kuppelförmigen Abschnitt (15) bildet, der die Oberfläche einer Außenstrebe (5) überragt, wobei der kuppelförmige Abschnitt (15) und die Außenstrebe (5) über eine doppelwandige Stützstruktur (16) mit Querrippen (17) miteinander verbunden sind.

2. Koppelstange nach Anspruch 1, **dadurch gekennzeichnet, dass** zwischen den Außenstreben (5, 5') zumindest bereichsweise eine parallel angeordnete Mittelstrebe (8) angeordnet ist, die mit den winklig angeordneten Querstreben (6, 9, 9') derart verbunden ist, dass sich zwischen der Mittelstrebe (8), den Au-βenstreben (5, 5'), den Querstreben (6) und der Mittelwand (7) einseitig geöffnete und im Wesentlichen trapezförmige Taschen (10) bilden.

3. Koppelstange nach Anspruch 2, **dadurch gekennzeichnet, dass** die trapezförmigen Taschen (10) im Bereich zwischen einer ersten der zwei Außenstreben (5) und der Mittelstrebe (8) entgegen weiteren trapezförmigen Taschen (10) im Bereich zwischen einer zweiten der zwei Außenstreben (5') und der Mittelstrebe (8) ausgerichtet sind, insbesondere sind die trapezförmigen Taschen (10) und die weiteren trapezförmigen Taschen (10) spiegelsymmetrisch zu der Mittelstrebe (8) ausgebildet.

4. Koppelstange nach einem der Ansprüche 1 bis 3, **dadurch gekennzeichnet, dass** die Außenstreben (5, 5') im Bereich zumindest einer der Gelenkaufnahmen in äußere Versteifungsstreben (11, 11') übergehen, die die Gelenkaufnahme oder beide Gelenkaufnahmen (2, 3) vollständig umgreifen.

5. Koppelstange nach einem der Ansprüche 2 bis 4, **dadurch gekennzeichnet, dass** die Mittelstrebe (8) im Bereich der Aufnahme des Gummilagers in eine innere Versteifungsstrebe (12) übergeht, die die Aufnahme des Gummilagers vollständig umgreift und über Querstreben (13) mit den äußeren Versteifungsstreben (11, 11') verbunden ist.

6. Koppelstange nach einem der Ansprüche 1 bis 5, **dadurch gekennzeichnet, dass** die Gelenkachse der Kugelgelenkaufnahme (8) und die Gelenkachse der anderen Gelenkaufnahme (C) zur Aufnahme des Gummilagers parallel oder um 90° verdreht zueinander ausgerichtet sind.

7. Koppelstange nach einem der Ansprüche 1 bis 6, **dadurch gekennzeichnet, dass** die Koppelstange (1) im Spritzgießverfahren hergestellt wird und als Kunststoffspritzgussteil ausgestaltet ist, insbesondere wird das Spritzgießverfahren mit einem Spritzgusswerkzeug durchgeführt, das im Bereich der Kugelgelenkaufnahme einen Kugelgelenkzapfen aufnimmt, der beim Spritzgie-βen unmittelbar oder mittelbar derart mit Kunststoff umspritzt wird, dass die Koppelstange (1) im ausgehärteten Zustand formschlüssig mit dem Kugelgelenkzapfen verbunden ist.

8. Koppelstange nach Anspruch 7, **dadurch gekennzeichnet, dass** ein Anspritzpunkt beim Spritzgießen an der Kugelgelenkaufnahme angeordnet ist, insbesondere am kuppelförmigen Abschnitt (15) der Kugelgelenkaufnahme.

## Claims

1. Coupling rod for the articulated attachment of chassis parts, the coupling rod having two joint receptacles (2, 3) which are connected together along a longitudinal axis (A) via a strut structure (4), wherein the strut structure (4) has two outer struts (5, 5') that are oriented parallel to one another and are connected together via a plurality of cross struts (6, 9, 9'), and a central wall (7) is arranged, which is oriented perpendicularly to the outer struts (5, 5') and connects the outer struts (5, 5') together, wherein one joint receptacle (2) is in the form of a ball-joint receptacle and the other joint receptacle (3) is designed to receive a rubber bearing, **characterized in that** the cross struts (6, 9, 9') exhibit an angle of 45° ± 10° with respect to the longitudinal axis (A), and **in that** the ball-joint receptacle forms a dome-shaped portion (15) which projects beyond the surface of an outer strut (5), wherein the dome-shaped portion (15) and the outer strut (5) are connected together via a double-walled supporting structure (16) having cross ribs (17).

2. Coupling rod according to Claim 1, **characterized in that** a parallel central strut (8) is arranged between the outer stuts (5, 5') at least regionally, said central strut (8) being connected to the angularly arranged cross struts (6, 9, 9') such that substantially trapezoidal pockets (10) that are open on one side are formed between the central strut (8), the outer struts (5, 5'), the cross struts (6) and the central wall (7).

3. Coupling rod according to Claim 2, **characterized in that** the trapezoidal pockets (10) in the region between a first of the two outer struts (5) and the central strut (8) are oriented counter to a further trapezoidal pocket (10) in the region between a second of the two outer struts (5') and the central strut (8), in particular the trapezoidal struts (10) and the further trapezoidal struts (10) are mirror-symmetric to the central strut (8).

4. Coupling rod according to any of Claims 1 to 3, **characterized in that** the outer struts (5, 5') transition, in the region of at least one of the joint receptacles, into outer reinforcing struts (11, 11') which engage fully around the joint receptacle or both joint receptacles (2, 3).

5. Coupling rod according to any of Claims 2 to 4, **characterized in that** the central strut (8) transitions, in the region of the receptacle for the rubber bearing, into an inner reinforcing strut (12) which engages fully around the receptacle for the rubber bearing and is connected via cross struts (13) to the outer reinforcing struts (11, 11').

6. Coupling rod according to any of Claims 1 to 5, **characterized in that** the joint axis of the ball-joint receptacle (B) and the joint axis of the other joint receptacle (C) for receiving the rubber bearing are oriented parallel to one another or in a manner rotated through 90° with respect to one another.

7. Coupling rod according to any of Claims 1 to 6, **characterized in that** the coupling rod (1) is produced by an injection-moulding process and is configured as a injection-moulded plastics part, in particular the injection-moulding process is carried out using an injection mould which, in the region of the ball-joint receptacle, receives a ball-joint pin which is directly or indirectly encapsulated with plastic during injection moulding such that the coupling rod (1) is connected to the ball-joint pin by a form fit in the cured state.

8. Coupling rod according to Claim 7, **characterized in that** a gating point during injection moulding is arranged on the ball-joint receptable, in particular on the dome-shaped portion (15) of the ball-joint receptacle.

## Revendications

1. Tige d'accouplement pour la liaison articulée de parties de châssis, la tige d'accouplement présentant deux logements d'articulation (2, 3), qui sont reliés l'un à l'autre le long d'un axe longitudinal (A) par l'intermédiaire d'une structure d'entretoises (4), la structure d'entretoises (4) possédant deux entretoises extérieures (5, 5') orientées parallèlement, qui sont reliées l'une à l'autre par l'intermédiaire de plusieurs entretoises transversales (6, 9, 9'), et une paroi centrale (7) étant agencée, qui est orientée perpendiculairement aux entretoises extérieures (5, 5') et qui relie les entretoises extérieures (5, 5') l'une à l'autre, un logement d'articulation (2) étant réalisé sous forme de logement d'articulation à rotule et l'autre logement d'articulation (3) étant réalisé pour la réception d'un palier en caoutchouc, **caractérisée en ce que** les entretoises transversales (6, 9, 9') présentent un angle de 45° ± 10° par rapport à l'axe longitudinal (A) et **en ce que** le logement d'articulation à rotule forme une section en forme de dôme (15), qui dépasse la surface d'une entretoise extérieure (5), la section en forme de dôme (15) et l'entretoise extérieure (5) étant reliées l'une à l'autre par l'intermédiaire une structure de support à double paroi (16) avec des nervures transversales (17).

2. Tige d'accouplement selon la revendication 1, **caractérisée en ce qu'**entre les entretoises extérieures (5, 5') est agencée au moins par zones une entretoise centrale (8) agencée en parallèle, qui est reliée aux entretoises transversales (6, 9, 9') agencées angulairement de telle sorte qu'entre l'entretoise centrale (8), les entretoises extérieures (5, 5'), les entretoises transversales (6) et la paroi centrale (7) se forment des poches (10) ouvertes d'un côté et essentiellement trapézoïdales.

3. Tige d'accouplement selon la revendication 2, **caractérisée en ce que** les poches trapézoïdales sont orientées dans la zone entre une première des deux entretoises extérieures (5) et l'entretoise centrale (8) à l'opposé d'autres poches trapézoïdales (10) dans la zone entre une deuxième des deux entretoises extérieures (5') et l'entretoise centrale (8), notamment les poches trapézoïdales (10) et les autres poches trapézoïdales (10) sont réalisées selon une symétrie spéculaire par rapport à l'entretoise centrale (8).

4. Tige d'accouplement selon l'une quelconque des revendications 1 à 3, **caractérisée en ce que** les entretoises extérieures (5, 5') se transforment, dans la zone d'au moins un des logements d'articulation, en entretoises de renforcement extérieures (11, 11') qui entourent complètement le logement d'articulation ou les deux logements d'articulation (2, 3).

5. Tige d'accouplement selon l'une quelconque des revendications 2 à 4, **caractérisée en ce que** l'entretoise centrale (8) se transforme, dans la zone du logement du palier en caoutchouc, en une entretoise de renforcement intérieure (12) qui entoure complètement le logement du palier en caoutchouc et qui est reliée aux entretoises de renforcement extérieures (11, 11') par l'intermédiaire d'entretoises transversales (13).

6. Tige d'accouplement selon l'une quelconque des revendications 1 à 5, **caractérisée** en ce l'axe d'articulation du logement d'articulation à rotule (B) et l'axe d'articulation de l'autre logement d'articulation (C) sont orientés parallèlement au logement du palier en caoutchouc ou tournés de 90° l'un par rapport à l'autre.

7. Tige d'accouplement selon l'une quelconque des revendications 1 à 6, **caractérisée en ce que** la tige d'accouplement (1) est fabriquée par un procédé de moulage par injection et est conçue sous forme de pièce moulée par injection de matière plastique, notamment le procédé de moulage par injection est réalisé avec un outil de moulage par injection qui reçoit, dans la zone du logement d'articulation à rotule, un pivot de rotule qui, lors du moulage par injection, est surmoulé directement ou indirectement de matière plastique de telle sorte que la tige d'accouplement (1), à l'état durci, est reliée par complémentarité de forme au pivot de rotule.

8. Tige d'accouplement selon la revendication 7, **caractérisée en ce qu'**un point d'injection est agencé sur le logement d'articulation à rotule lors du moulage par injection, notamment sur la section en forme de dôme (15) du logement d'articulation à rotule.
